(19) Europäisches Patentamt
European Patent Office
Office européen des brevets

(11) EP 4 773 012 A1

(12) EUROPEAN PATENT APPLICATION

(43) Date of publication:
08.07.2026 Bulletin 2026/28

(51) International Patent Classification (IPC):
*G06F 11/10* (2006.01)

(21) Application number: 25227751.2

(52) Cooperative Patent Classification (CPC):
G06F 11/1048

(22) Date of filing: 30.12.2025

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 07.01.2025 KR 20250001956

(71) Applicant: SK hynix Inc.
Bubal-eub
Icheon-si Gyeonggi-do 17336 (KR)

(72) Inventors:
• KANG, Seong Yoon
17336 Icheon-si, Gyeonggi-do (KR)
• JANG, Mun Seon
17336 Icheon-si, Gyeonggi-do (KR)
• CHA, Sang Uhn
17336 Icheon-si, Gyeonggi-do (KR)

(74) Representative: Isarpatent
Patent- und Rechtsanwälte PartG mbB
Friedrichstraße 31
80801 München (DE)

(54) **MEMORY DEVICE INCLUDING ECC ENGINE**

(57) A memory system includes a memory controller; and a memory device configured to: during a write operation, generate a write error correction code based on write data, and store, according to a write poison signal received from the memory controller, the write data and the write error correction code, or first and second patterns in a memory cell array, and during a read operation, correct an error in read data based on a read error correction code read from the memory cell array, output a decoding status signal according to an error correction result, and generate a read poison signal according to at least one of the decoding status signal, a first comparison result between the read data and the first pattern, and a second comparison result between the read error correction code and the second pattern, to output the read poison signal to the memory controller.

FIG. 1

EP 4 773 012 A1

**Description**

**BACKGROUND**

**1. Field**

Various embodiments of the present disclosure relate to a semiconductor design technology, and more particularly, to a memory device performing an error correction operation.

**2. Description of the Related Art**

In the early days of the semiconductor memory industry, a plurality of original good dies having no defective memory cells in a memory chip having passed through a semiconductor manufacturing process have been distributed on a wafer. However, as the capacity of a memory device gradually increased, it has become difficult to produce a memory having no defective memory cells. At the present time, there is no probability that such a memory will be manufactured. One way to overcome such a concern is a method of repairing defective memory cells of a memory with redundancy memory cells. As another way, a method of error correction of data of memory cells using an error correction circuit embedded in a memory device and/or a memory controller is used.

The memory controller may transmit damaged data (hereinafter, referred to as "poison data") to the memory device. The poison data may be data known to be damaged by a host. During a write operation, the memory controller may transmit write data to the memory device, together with a poison signal indicating whether the write data are poison data, and the memory device may store data in a target memory area according to the poison signal. The memory device may store poison information indicating that data are damaged by storing a specific data pattern in the target memory area without allocating an additional memory area for storing the poison signal. During a read operation, the memory device may set a poison signal by checking whether read data are a specific data pattern, and transmit the read data to the memory controller together with the poison signal. As described above, by using the poison signal, it is possible to manage already damaged data which are provided from the outside (i.e., the memory controller), and which have errors different from errors generated during processing data.

However, if an error occurs while storing a specific data pattern, the poison information may be lost, and in severe cases, silent data corruption (SDC) may be caused. Therefore, there is a need to develop a technology for efficiently managing the poison information.

**SUMMARY**

Embodiments of the present disclosure are directed to a method capable of efficiently managing poison information in a memory device performing an error correction operation.

In accordance with an embodiment of the present disclosure, a memory system includes a memory controller; and a memory device configured to: during a write operation, generate a write error correction code based on write data, and store, according to a write poison signal received from the memory controller, the write data and the write error correction code, or first and second patterns in a memory cell array included in the memory device, and during a read operation, correct an error in read data read from the memory cell array based on a read error correction code read from the memory cell array, output a decoding status signal according to an error correction result, and generate a read poison signal according to at least one of the decoding status signal, a first comparison result between the read data and the first pattern, and a second comparison result between the read error correction code and the second pattern, to output the read poison signal to the memory controller.

In accordance with an embodiment of the present disclosure, a memory device includes a pattern selection circuit configured to provide, to a memory cell array, write data and a write error correction code which are externally received, or first and second patterns which are internally preset, according to a write poison signal; an error correction code (ECC) decoder configured to correct an error in read data read from the memory cell array based on a read error correction code read from the memory cell array, and output a decoding status signal according to an error correction result; and a pattern determination circuit configured to output a read poison signal according to the decoding status signal, a first comparison result between the read data and the first pattern, and a second comparison result between the read error correction code and the second pattern.

In accordance with an embodiment of the present disclosure, a memory device includes an error correction code (ECC) decoder configured to correct an error in read data read from a memory cell array based on a read error correction code read from the memory cell array, a first decoding table, and a second decoding table different from the first decoding table; and a poison handling circuit configured to provide, to the memory cell array, write data and a write error correction code which are externally received, or first and second patterns which are internally preset, according to a write poison signal, and output a read poison signal according to a first comparison result between the read data and the first pattern, and a second comparison result between the read error correction code and the second pattern while configuring the second pattern to have column vectors different from results of an exclusive OR operation on two or more of column vectors of the first decoding table and column vectors of the second decoding table.

The poison handling circuit may be configured to set the first pattern to have all-zero bits. The poison handling circuit may include: a pattern selection circuit configured to provide, to the memory cell array, the write data and the write error correction code, or the first and second patterns, according to the write poison signal; and a pattern determination circuit configured to output the read poison signal activated when both the first comparison result and the second comparison result match. The ECC decoder may correct a random 1-bit error of the read data based on the first decoding table; and correct an adjacent 2-bit error of the read data based on the second decoding table. The ECC decoder may set the first decoding table to have a same configuration as a check matrix used to generate a syndrome; and set the second decoding table to have column vectors of the first decoding table reduced by a rate of 2:1. The ECC decoder may output a decoding status signal according to an error correction result.

According to embodiments of the present disclosure, the memory device may efficiently manage the poison information while providing the improved error correction capability. In particular, in a memory device capable of correcting adjacent 2-bit errors as well as a 1-bit error due to the expansion of the error correction capability of the ECC engine, it is possible to prevent the silent data corruption (SDC) by preventing, when an error occurs in the poison data, a situation in which the poison information is lost and an error of the poison data is corrected. In addition, according to embodiments of the present disclosure, the memory device may improve the reliability thereof by increasing the accuracy of the poison information.

These and other features and advantages of the embodiments of the present disclosure will become apparent to those skilled in the art from the following detailed description in conjunction with the following drawings.

## BRIEF DESCRIPTION OF THE DRAWINGS

FIG. 1 is a block diagram illustrating a memory system according to an embodiment of the present disclosure.
FIG. 2 is a diagram illustrating a detailed configuration of a memory device of FIG. 1.
FIG. 3 is a block diagram illustrating a detailed configuration of an ECC engine and a poison handling circuit according to an embodiment of the present disclosure.
FIG. 4 is a block diagram illustrating a detailed configuration of an ECC encoder and an ECC decoder of FIG. 3.
FIG. 5 is a table for describing a check matrix used in the ECC encoder and ECC decoder of FIG. 4.
FIGS. 6 and 7 are diagrams for describing an operation of the ECC encoder using the check matrix of FIG. 5.
FIGS. 8 to 11C are diagrams for describing an operation of the ECC decoder.
FIG. 12 is a diagram for describing a first pattern and a second pattern according to an embodiment of the present disclosure.
FIGS. 13A to 13C are diagrams for describing an error correction operation using the first and second patterns of FIG. 12.
FIG. 14 is a diagram illustrating a detailed configuration of a pattern selection circuit of FIG. 3.
FIG. 15 is a circuit diagram illustrating a detailed configuration of a pattern determination circuit of FIG. 3.
FIG. 16 is a flowchart for describing a write operation of a memory device according to an embodiment of the present disclosure.
FIG. 17 is a flowchart for describing a read operation of a memory device according to an embodiment of the present disclosure.
FIG. 18 is a block diagram illustrating a detailed configuration of an ECC engine and a poison handling circuit according to another embodiment of the present disclosure.
FIG. 19 is a circuit diagram illustrating a detailed configuration of a pattern determination circuit of FIG. 18.
FIG. 20 is a flowchart for describing a read operation of a memory device according to another embodiment of the present disclosure.

## DETAILED DESCRIPTION

Various embodiments of the present disclosure will be described below in more detail with reference to the accompanying drawings. The embodiments of the present disclosure may, however, be in different forms and should not be construed as limited to the embodiments set forth herein. Rather, these embodiments are provided so that this disclosure will be thorough and complete, and will fully convey the scope of the present disclosure to those skilled in the art. Throughout this disclosure, like reference numerals refer to like parts throughout the various figures and embodiments of the present disclosure.

It will be understood that when an element is referred to as being "coupled" or "connected" to another element, it may mean that the two are directly coupled or the two are electrically connected to each other with another circuit or element intervening therebetween. It will be further understood that the terms "comprise", "include", "have", etc. when used in this specification, specify the presence of stated features, numbers, steps, operations, elements, components, and/or combinations of them but do not preclude the presence or addition of one or more other features, numbers, steps, operations, elements, components, and/or combinations thereof. In the present disclosure, the singular forms are intended to include the plural forms as well, unless the context clearly indicates otherwise.

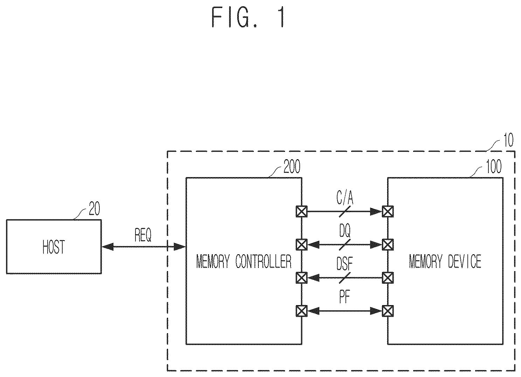

FIG. 1 is a block diagram illustrating a memory system 10 according to an embodiment of the present disclosure.

Referring to FIG. 1, the memory system 10 may include a memory device 100 and a memory controller 200.

The memory system 10 may store data under the control of a host 20, such as a cellular phone, a smartphone, an MP3 player, a laptop computer, a desktop computer, a game player, a TV, a tablet PC, or an in-vehicle infotainment system. The host 20 may be an external device of the memory system 10.

The memory controller 200 may control operations of the memory system 10 and control data transfer between the host 20 and the memory device 100. The memory controller 200 may generate a command/address signal C/A according to a request REQ from the host 20 and provide the generated command/address signal C/A to the memory device 100. Depending on an embodiment, the memory controller 200 may provide a clock together with the command/address signal C/A to the memory device 100. The memory controller 200 may provide data DQ corresponding to the request REQ from the host 20 to the memory device 100, and provide the data DQ read from the memory device 100 to the host 20. The command/address signal C/A provided by the memory controller 200 to the memory device 100 may include an active command ACT, a precharge command PCG, a read command RD, a write command WT, and the like.

The memory device 100 may store the data DQ. The memory device 100 may operate under the control of the memory controller 200. The memory device 100 may include a memory cell array in which a plurality of memory cells storing the data DQ are arranged in an array form. The memory device 100 may include dynamic random access memory (DRAM) including dynamic memory cells. In an embodiment, the memory device 100 may be a double data rate synchronous dynamic random access memory (DDR SDRAM), a low power double data rate (LPDDR) type SDRAM, a graphics double data rate (GDDR) SDRAM, a Rambus dynamic random access memory (RDRAM), or others.

The memory device 100 may receive the command/address signal C/A from the memory controller 200 to access an area selected from the memory cell array. That is, the memory device 100 may perform an operation instructed by a command on the area selected by an address. For example, the memory device 100 may perform a write operation (e.g., program operation) to write data DQ to the area selected by the address. During a read operation, the memory device 100 may read data DQ from the area selected by the address.

The memory device 100 may include an error correction code (ECC) engine. The ECC engine disposed in the memory device 100 may be referred to as an on-die (or on-chip) ECC engine. The ECC engine may generate an error correction code using write data DQ during a write operation, and may store the write data DQ and the error correction code in the selected area. During a read operation, the ECC engine may read data and an error correction code from the selected area, and generate error-corrected data DQ by correcting an error of the read data by using the read error correction code. The ECC engine may generate a decoding status signal DSF indicating an error state of the error-corrected data DQ based on the error correction result. The memory device 100 may provide the decoding status signal DSF to the memory controller 200 together with the error-corrected data DQ. For example, the decoding status signal DSF may be composed of 2-bit signals and provide information on "NE" indicating that there is no error, "CE" indicating that a correctable error has occurred, and "UE" indicating that an uncorrectable error has occurred.

Moreover, when the data DQ is damaged data (i.e., poison data), the memory controller 200 may transmit, together with the data DQ, a poison signal PF indicating that the data DQ is poison data, to the memory device 100. The poison data are data known to be damaged by the host 20, and may be data including an error. The memory device 100 may store data DQ in an area selected by an address according to the poison signal PF during a write operation. For example, when the poison signal is set to a low bit, the memory device 100 may store the data DQ and the error correction code generated using the data DQ in the selected area. When the poison signal is set to a high bit, the memory device 100 may store a specific data/parity pattern in the selected area instead of the data DQ and the error correction code. During a read operation, the memory device 100 may transmit the poison signal PF to the memory controller 200 according to a result of checking whether the data DQ and the error correction code, which are read from an area selected by an address, are identical to the specific data/parity pattern. For example, when the read data DQ and the read error correction code are identical to the specific data/parity pattern, the memory device 100 may set the poison signal to a high bit and transmit the poison signal to the memory controller 200. When the poison signal of a high bit is input, the memory controller 200 may recognize the data DQ read from the memory device 100 as the poison data and omit an unnecessary operation.

The data DQ may refer to read data or write data since both data are communicated through the same data channel DQ between the memory device 100 and the memory controller 200. Likewise, the poison signal PF may refer to a poison signal generated in the memory controller 200 or a poison signal generated in the memory device 100 since both poison signals are communicated through the same poison signal channel PF between the memory device 100 and the memory controller 200.

Further, when an error occurs in a specific data/parity pattern stored according to the poison signal, the memory device 100 may lose poison information and provide the poison signal PF set to an incorrect bit (i.e., a low bit) to the memory controller 200. Recently, as the error correction capability of the memory device 100 has been improved to enable not only an existing 1-bit error correction but also an adjacent 2-bit error correction, the memory device 100 can correct an error in the poison data in which the error has occurred, to provide the decoding status signal DSF indicating "CE" to the memory controller 200. Accordingly, the memory controller 200 may perform a malfunction or unnecessary error correction operation by recognizing the poison data as normal data in which a correctable error has occurred.

To prevent such malfunction or unnecessary operations, according to an embodiment of the present disclosure, the memory device 100 may preset a first pattern and a second pattern. In this case, the first pattern and the second pattern may be set as a data pattern and a parity pattern, respectively, and may be set as a pattern that cannot be corrected by adjacent 2-bit error correction as well as the existing 1-bit error correction. For example, the ECC engine of the memory device 100 may correct a random 1-bit error of the read data DQ using a first decoding table and correct an adjacent 2-bit error of the read data DQ using a second decoding table different from the first decoding table. The first pattern may include all-zero bits, and the second pattern may be composed of column vectors different from results of an exclusive OR (XOR) operation on any two or more of column vectors of the first decoding table and column vectors of the second decoding table.

During a write operation, the memory device 100 may select the data DQ and the error correction code, or select the first pattern and the second pattern, according to the poison signal PF, to store the selected data in the memory cell array. In addition, during a read operation, the memory device 100 may correct an error in the read data DQ using the read error correction code from the memory cell array, and generate the decoding status signal DSF according to the error correction result. The memory device 100 may output the poison signal PF according to one or more of the decoding status signal DSF, a first comparison result between the read data DQ and the first pattern, and a second comparison result between the read error correction code and the second pattern.

According to an embodiment, during the read operation, the memory device 100 may output the poison signal PF set to a high bit to the memory controller 200 when the decoding status signal DSF indicates "UE", and the first comparison result or the second comparison result matches. According to an embodiment, during the read operation, the memory device 100 may output the poison signal PF set to a high bit to the memory controller 200 when both the first comparison result and the second comparison result match.

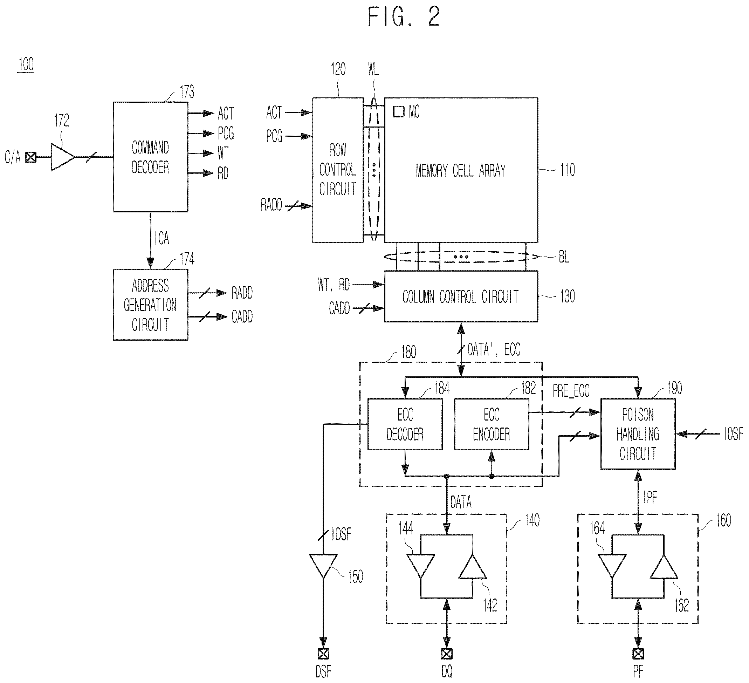

FIG. 2 is a diagram illustrating a detailed configuration of the memory device 100 of FIG. 1.

Referring to FIG. 2, the memory device 100 may include a memory cell array 110, a row control circuit 120, a column control circuit 130, a data input/output circuit 140, a decoding output circuit 150, a poison input/output circuit 160, a command/address receiving circuit 172, a command decoder 173, an address generation circuit 174, an error correction code (ECC) engine 180, and a poison handling circuit 190.

The memory cell array 110 may include a plurality of memory cells MC for storing data. The plurality of memory cells MC may be coupled between a plurality of word lines WL and a plurality of bit lines BL arranged in an array type. The memory cell array 110 may be coupled to the row control circuit 120 through the plurality of word lines WL and coupled to the column control circuit 130 through the plurality of bit lines BL. The plurality of word lines WL may extend in a first direction (e.g., a row direction) and may be sequentially disposed in a second direction (e.g., a column direction) perpendicular to the first direction. The memory cell array 110 may be composed of at least one bank. The number of banks or the number of memory cells MC may be determined depending on the capacity of the memory device 100. The memory cell array 110 may receive and store data DATA' and an error correction code ECC from the column control circuit 130 during a write operation. During a read operation, the memory cell array 110 may output the stored data DATA' and the stored error correction code ECC to the column control circuit 130. The data DATA' may be defined as user data, and hereinafter, it will be referred to as main data. The error correction code ECC may be referred to as parity data.

The command/address receiving circuit 172 may receive a command/address signal C/A from a memory controller (200 of FIG. 1). Depending on the type of memory device 100, a command and an address may be input through the same input terminals, or a command and an address may be input through separate input terminals. In FIG. 2, it is illustrated that the command and the address are input through the same input terminals. The command/address signal C/A may be formed of multiple bits.

The command decoder 173 may decode the command/address signal C/A received by the command/address receiving circuit 172 to generate an active command ACT, a precharge command PCG, a write command WT, and a read command RD. The active command ACT is a signal input when an active operation is instructed, the precharge command PCG is a signal input when a precharge operation is instructed, the write command WT is a signal input when a write operation is instructed, and the read command RD may be a signal input when a read operation is instructed. Depending on an embodiment, the command decoder 173 may decode the command/address signal C/A to additionally generate a refresh command for instructing a refresh operation and a mode setting command for instructing a mode register setting operation.

The address generation circuit 174 may classify an internal address ICA received from the command decoder 173 into a row address RADD and a column address CADD. The row address RADD may be an address for selecting one of the plurality of word lines WL, and the column address CADD may be an address for selecting some bit lines for performing a read operation or a write operation, from the plurality of bit lines BL. Each of the row address RADD and the column address CADD may be formed of multiple bits.

The row control circuit 120 may perform the active operation of activating a row selected by the row address RADD in response to the active command ACT, and may perform the precharge operation of precharging the activated row in response to the precharge command PCG.

The column control circuit 130 may select some bit lines of the plurality of bit lines BL of the memory cell array 110 according to the column address CADD, perform a read operation of reading the data DATA' and the error correction code ECC from the memory cells MC through the selected bit lines in response to the read command RD, or perform a write operation of writing the data DATA' and the error correction code ECC to the memory cells MC through the selected bit lines in response to the write command WT.

The data input/output circuit 140 may transmit data DQ to the memory controller 200, or receive the data DQ from the memory controller 200. The data input/output circuit 140 may include a data input circuit 142 and a data output circuit 144. The data input circuit 142 may receive data DATA to be written to the memory cell array 110 during a write operation. The data output circuit 144 may output the data DATA read from the memory cell array 110 during a read operation. Hereinafter, the data DATA transferred to the inside of the memory device 100 through the data input/output circuit 140 may be defined as internal data DATA.

The decoding output circuit 150 may receive an internal decoding status signal IDSF generated from the ECC engine 180, to transmit a decoding status signal DSF to the memory controller 200. Hereinafter, the internal decoding status signal IDSF and the decoding status signal DSF may represent the same information and may both be referred to as a decoding status signal.

The poison input/output circuit 160 may receive a poison signal PF from the memory controller 200 or transmit the poison signal PF to the memory controller 200. The poison input/output circuit 160 may include a poison input circuit 162 for receiving an internal poison signal IPF from the memory controller 200 during a write operation, and a poison output circuit 164 for transmitting the internal poison signal IPF generated from the poison handling circuit 190 to the memory controller 200 during a read operation.

The ECC engine 180 may include an ECC encoder 182 and an ECC decoder 184. The ECC encoder 182 may be called an error correction code generation circuit, and the ECC decoder 184 may be called an error correction circuit.

The ECC encoder 182 may generate a preliminary error correction code PRE_ECC by using the internal data DATA input from the memory controller 200 during a write operation, that is, during an encoding operation of the ECC engine 180. The ECC decoder 184 may correct an error of the main data DATA' read from the memory cell array 110 by using the error correction code ECC read from the memory cell array 110 during a read operation, that is, during a decoding operation of the ECC engine 180. Here, correcting the error may mean detecting the error of the main data DATA' and correcting the detected error when the error is detected. By using a check matrix also called an H matrix, the ECC encoder 182 may generate the preliminary error correction code PRE_ECC, and the ECC decoder 184 may correct the error. In addition, the ECC decoder 184 may generate the internal decoding status signal IDSF indicating an error state of the error-corrected data based on the error correction result.

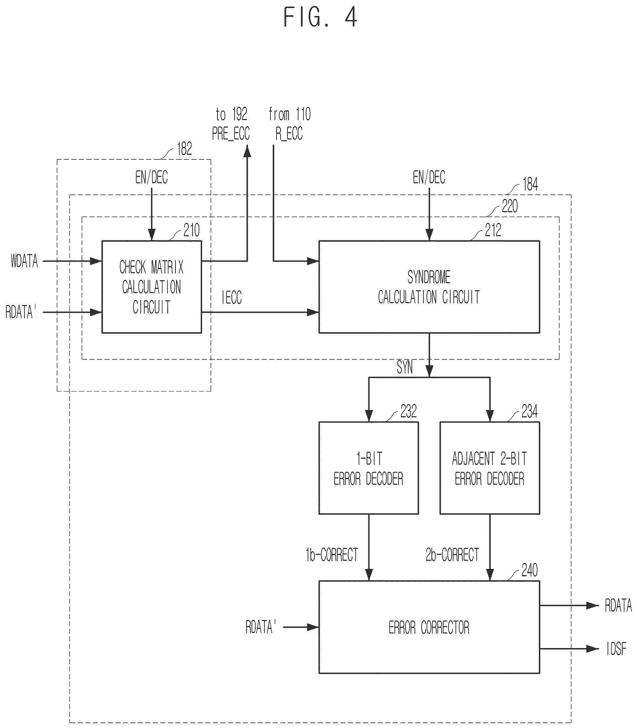

In particular, in an embodiment of the present disclosure, the ECC decoder 184 may have the ability to correct both a random 1-bit error occurring in the main data DATA' and an adjacent (or adjacent) 2-bit error occurring in adjacent bits of the main data DATA'. For example, the ECC decoder 184 may correct a random 1-bit error in 128-bit data and correct an adjacent 2-bit error in 128-bit data. The detailed configuration of the ECC encoder 182 and the ECC decoder 184 will be described in FIGS. 4 to 11C.

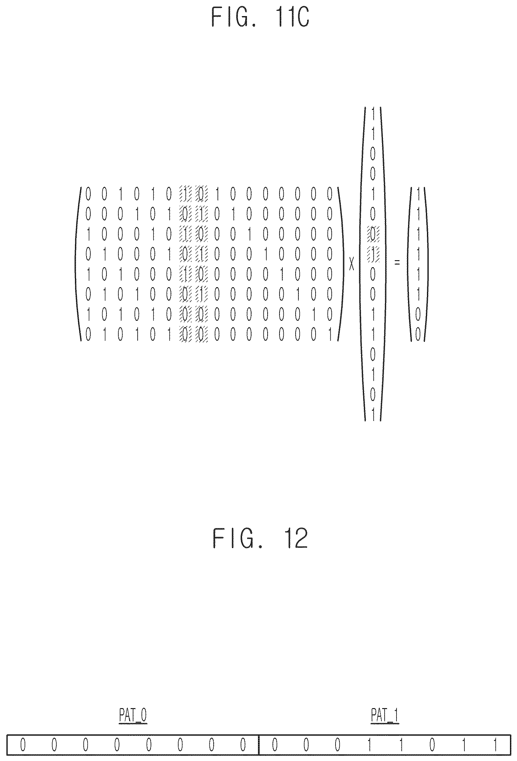

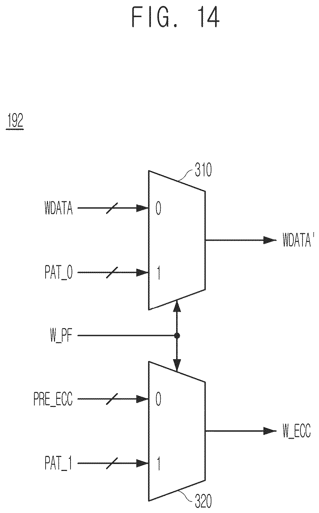

The poison handling circuit 190 may preset a first pattern and a second pattern. In this case, the first pattern and the second pattern may be set as a data pattern and a parity pattern, respectively, and may be set as a pattern that cannot be corrected by an adjacent 2-bit error correction as well as a 1-bit error correction. During a write operation, the poison handling circuit 190 may provide the main data DATA' and the error correction code ECC to the column control circuit 130 by selecting the internal data DATA and the preliminary error correction code PRE_ECC, or selecting the preset first pattern and the preset second pattern, according to the internal poison signal IPF. For example, when the internal poison signal IPF is set to a high bit, the poison handling circuit 190 may provide the preset first pattern and the second pattern as the main data DATA' and the error correction code ECC. A detailed configuration of the first pattern and the second pattern according to an embodiment of the present disclosure will be described with reference to FIGS. 12 to 13C. During a read operation, the poison handling circuit 190 may compare the main data DATA' with the error correction code ECC, which are read from the memory cell array 110, with the preset first pattern and the preset second pattern, respectively. The poison handling circuit 190 may set the internal poison signal IPF according to the internal decoding status signal IDSF and the comparison results. The detailed configuration and operation of the poison handling circuit 190 will be described with reference to FIGS. 14 to 20.

Hereinafter, a method of handling poison data will be described through specific embodiments.

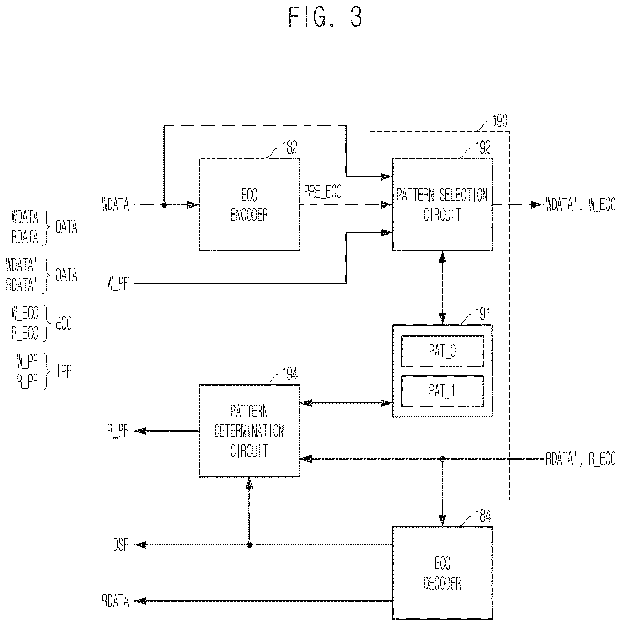

FIG. 3 is a block diagram illustrating a detailed configuration of the ECC engine 180 and the poison handling circuit 190 of FIG. 2, according to an embodiment of the present disclosure. In FIG. 3, in the basis of a write operation and a read operation, the internal data DATA and the main data DATA' are divided into write data WDATA and WDATA' and read data RDATA', the error correction code ECC is divided into a write error correction code W_ECC and a read error correction code R_ECC, and the internal poison signal IPF is divided into a write poison signal W_PF and a read poison signal R_PF.

Referring to FIG. 3, the poison handling circuit 190 may include a pattern setting circuit 191, a pattern selection circuit 192, and a pattern determination circuit 194.

The pattern setting circuit 191 may preset a first pattern PAT_0 and a second pattern PAT_1. The first pattern PAT_0 and the second pattern PAT_1 stored in the pattern setting circuit 191 may be provided to the pattern selection circuit 192 and the pattern determination circuit 194, respectively. FIG. 3 shows a case in which the first pattern PAT_0 and the second pattern PAT_1 are stored in separate pattern setting circuits 191, but the embodiments are not limited thereto. According to an embodiment, the pattern selection circuit 192 and the pattern determination circuit 194 may store the first pattern PAT_0 and the second pattern PAT_1, respectively.

During a write operation, the ECC encoder 182 may generate the preliminary error correction code PRE_ECC by using the write data WDATA. The pattern selection circuit 192 may output the write data WDATA' and the write error correction code W_ECC by selecting the write data WDATA and the preliminary error correction code PRE_ECC, or selecting the preset first pattern PAT_0 and the second pattern PAT_1, according to the write poison signal W_PF. The write data WDATA' and the write error correction code W_ECC may be provided to the column control circuit 130 and may be written to the memory cell array 110.

During a read operation, the ECC decoder 184 may receive the read data RDATA' and the read error correction code R_ECC from the memory cell array 110, and correct an error of the read data RDATA' using the read error correction code R_ECC. Furthermore, the ECC decoder 184 may generate the internal decoding status signal IDSF indicating an error state of the error-corrected data based on the error correction result. The pattern determination circuit 194 may receive the read data RDATA' and the read error correction code R_ECC from the memory cell array 110, and compare the read data RDATA' and the read error correction code R_ECC with the preset first pattern PAT_0 and the second pattern PAT_1, respectively. The pattern determination circuit 194 may set the read poison signal R_PF according to the internal decoding status signal IDSF and the comparison results.

Before describing the first pattern PAT_0 and the second pattern PAT_1 according to an embodiment of the present disclosure, the check matrix used in the ECC encoder 182 and the ECC decoder 184 will be described.

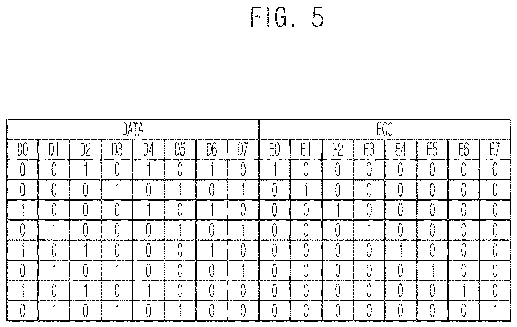

FIG. 4 is a block diagram illustrating a detailed configuration of the ECC encoder 182 and the ECC decoder 184 of FIG. 3. FIGS. 5 to 11C are diagrams for helping in the understanding of FIG. 4.

Referring to FIG. 4, the ECC encoder 182 may include a check matrix calculation circuit 210. The ECC decoder 184 may include a syndrome generation circuit 220, a 1-bit error decoder 232, an adjacent 2-bit error decoder 234, and an error corrector 240. The syndrome generation circuit 220 may include the check matrix calculation circuit 210 and a syndrome calculation circuit 212. The ECC encoder 182 and the ECC decoder 184 may share the check matrix calculation circuit 210.

The check matrix calculation circuit 210 may generate the preliminary error correction code PRE_ECC by calculating the check matrix and the write data WDATA during an encoding operation in which an encoding/decoding signal EN/DEC is activated. In addition, the check matrix calculation circuit 210 may generate a calculation result IECC by calculating the check matrix and the read data RDATA' during a decoding operation in which the encoding/decoding signal EN/DEC is deactivated. In summary, the check matrix calculation circuit 210 may receive the write data WDATA transmitted from the memory controller during the encoding operation to generate the preliminary error correction code PRE_ECC, and may receive the read data RDATA' from the memory cell array 110 during the decoding operation to generate the calculation result IECC.

Referring to FIG. 5, an example of the check matrix used by the check matrix calculation circuit 210 is shown. For convenience of description, the data DATA includes 8 bits D0 to D7 and the error correction code ECC includes 8 bits E0 to E7. The check matrix may include a matrix of (the number of bits of the error correction code) x (the number of bits of the data + the number of bits of the error correction code). Since the error correction code ECC includes 8 bits and the data DATA includes 8 bits, the check matrix may be composed of an $8 \times 16$ matrix. Each element of the check matrix may have a value of one (1) or zero (0). Column vectors of the check matrix may correspond to the bits D0 to D7 of the data DATA and the bits E0 to E7 of the error correction code ECC. For example, in FIG. 5, it can be seen that D1 corresponds to a column vector with a value of '00010101' and E1 corresponds to '01000000'.

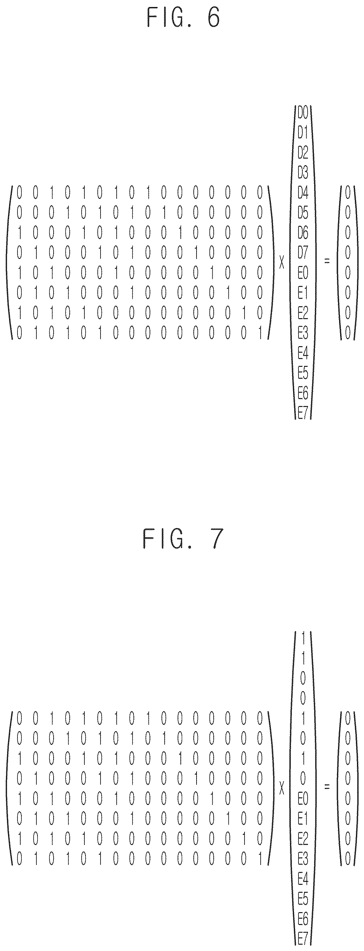

Referring to FIG. 6, an operation of generating the error correction code ECC of the ECC encoder 182 is illustrated. The ECC encoder 182 may multiply each of the column vectors of the check matrix with bits of the data DATA and the error correction code ECC to generate the error correction code ECC so that a sum of each row becomes 0 (i.e., an even number).

That is, bits E0 to E7 of the error correction code ECC may be generated so that Equation 1 to Equation 8 below are satisfied.

$$0*D0+0*D1+1*D2+0*D3+1*D4+0*D5+1*D6+0*D7+1*E0+0\ *E1+0*E2+0*E3+0*E4+0*E5+0*E6+0*E7 = 0 \quad \text{Equation 1}$$

$$0*D0+0*D1+0*D2+1*D3+0*D4+1*D5+0*D6+1*D7+0*E0+1\ *E1+0*E2+0*E3+0*E4+0*E5+0*E6+0*E7 = 0 \quad \text{Equation 2}$$

$$1*D0+0*D1+0*D2+0*D3+1*D4+0*D5+1*D6+0*D7+0*E0+0\ *E1+1*E2+0*E3+0*E4+0*E5+0*E6+0*E7 = 0 \quad \text{Equation 3}$$

$$0*D0+1*D1+0*D2+0*D3+0*D4+1*D5+0*D6+1*D7+0*E0+0\ *E1+0*E2+1*E3+0*E4+0*E5+0*E6+0*E7 = 0 \quad \text{Equation 4}$$

$$1*D0+0*D1+1*D2+0*D3+0*D4+0*D5+1*D6+0*D7+0*E0+0\ *E1+0*E2+0*E3+1*E4+0*E5+0*E6+0*E7 = 0 \quad \text{Equation 5}$$

$$0*D0+1*D1+0*D2+1*D3+0*D4+0*D5+0*D6+1*D7+0*E0+0\ *E1+0*E2+0*E3+0*E4+1*E5+0*E6+0*E7 = 0 \quad \text{Equation 6}$$

$$1*D0+0*D1+1*D2+0*D3+1*D4+0*D5+0*D6+0*D7+0*E0+0\ *E1+0*E2+0*E3+0*E4+0*E5+1*E6+0*E7 = 0 \quad \text{Equation 7}$$

$$0*D0+1*D1+0*D2+1*D3+0*D4+1*D5+0*D6+0*D7+0*E0+0\ *E1+0*E2+0*E3+0*E4+0*E5+0*E6+1*E7 = 0 \quad \text{Equation 8}$$

An addition in the above equations and the following description means an exclusive OR (XOR) operation. Therefore, the result of the addition may be 0 when the number of 1's is an even number and may be 1 when the number of 1's is an odd number. For example, 1+1+0+1 may be 1 and 0+1+1+0 may be 0.

As illustrated in FIG. 6, Equation 1 to Equation 8 may be expressed as a matrix multiplication of a check matrix of an 8x16 matrix and data DATA (=DO to D7) and an error correction code ECC (=EO to E7) of a 16x1 matrix. The error correction code ECC (=E0 to E7) may be generated by such a matrix multiplication operation.

Referring to FIG. 7, a process of generating an error correction code ECC for data DATA (1,1,0,0,1,0,1,0) using the check matrix of FIG. 5 by the ECC encoder 182 is illustrated. That is, it can be seen that (1,1,0,0,1,0,1,0) is substituted into the DATA (=D0 to D7) in the matrix multiplication of FIG. 6. When the value of the error correction codes ECC (E0 to E7) satisfying the matrix multiplication of FIG. 7 is obtained, the error correction code may be generated as (0,0,1,1,0,1,0,1).

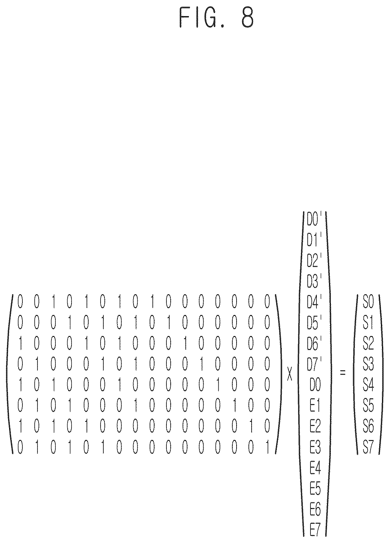

Referring back to FIG. 4, the syndrome calculation circuit 212 may generate a syndrome SYN by adding the read error correction code R_ECC read from the memory cell array 110 and the calculation result IECC generated by the check matrix calculation circuit 210 during the decoding operation in which the encoding/decoding signal EN/DEC is deactivated. As a result, as shown in FIG. 8, the syndrome generation circuit 220 may generate the syndrome SYN (= SO to S7) by performing a matrix multiplication operation on the check matrix used by the ECC encoder 182, and the read data RDATA' (=D0' to D7') and the read error correction code R_ECC (=EO to E7).

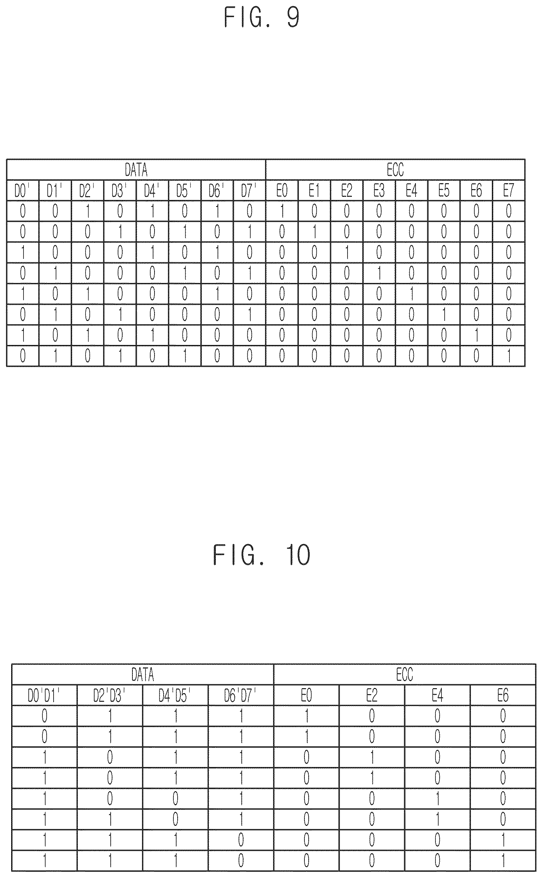

The 1-bit error decoder 232 may decode the syndrome SYN to generate random 1-bit error correction information 1b_CORRECT for correcting a random 1-bit error of the read data RDATA' read from the memory cell array 110. The 1-bit error decoder 232 may use a decoding table that is same as the check matrix used by the check matrix calculation circuit 210. Referring to FIG. 9, a decoding table used by the 1-bit error decoder 232 is shown. When the syndrome SYN matches one of column vectors in the decoding table of FIG. 9, the 1-bit error decoder 232 may generate the random 1-bit error correction information 1b_CORRECT indicating that there is an error in data of a corresponding 1-bit. For example, when the value of the syndrome (S0 to S7) is (0,0,0,1,0,1,0,1), the 1-bit error decoder 232 may generate the random 1-bit error correction information 1b_CORRECT indicating that there is an error in the data D1' in which the column vector matches the syndrome (S0 to S7). When the value of the syndrome (S0 to S7) is (1,0,1,0,0,0,1,0), the 1-bit error decoder 232 may generate the random 1-bit error correction information 1b_CORRECT indicating that there is an error in the data D4' in which the column vector matches the syndrome (S0 to S7).

The adjacent 2-bit error decoder 234 may decode the syndrome SYN to generate adjacent 2-bit error information 2b_CORRECT for correcting an adjacent 2-bit error of the read data RDATA' read from the memory cell array 110. The adjacent 2-bit error decoder 234 may perform a decoding operation for correcting the simultaneous error in data D0' and data D1' or simultaneous error in data D2' and data D3'. Referring to FIG. 10, a decoding table used by the adjacent 2-bit error decoder 234 is illustrated. The decoding table of FIG. 10 may be obtained by summing column vectors of the decoding table of FIG. 9 reduced by a rate of 2:1. For example, a D0'D1' column vector of the decoding table of FIG. 10 may be a column vector obtained by summing the D0' column vector and the D1' column vector of the decoding table of FIG. 9. In addition, a D2'D3' column vector of the decoding table of FIG. 10 may be a column vector obtained by summing the D2' column vector and the D3' column vector of the decoding table of FIG. 9. When the syndrome SYN matches one of column vectors in the decoding table of FIG. 10, the adjacent 2-bit error decoder 234 may generate the adjacent 2-bit error information 2b_CORRECT indicating that there is an error in data of a corresponding 2-bit. For example, when the values of the syndrome (S0 to S7) are (1,1,1,1,0,0,1,1), the adjacent 2-bit error decoder 234 may generate the adjacent 2-bit error information 2b_CORRECT indicating that there is an error in the data D4' and the data D5' in which the column vector matches the syndrome (S0 to S7).

Hereinafter, the decoding table of FIG. 9 will be referred to as a first decoding table, and the decoding table of FIG. 10 will be referred to as a second decoding table.

The error corrector 240 may correct the error of the read data RDATA' based on the random 1-bit error correction information 1b_CORRECT and the adjacent 2-bit error information 2b_CORRECT. The error corrector 240 may correct the error by inverting a corresponding bit when the random 1-bit error correction information 1b_CORRECT indicates that there is an error in any 1-bit of the read data RDATA'. In addition, the error corrector 240 may correct the error by inverting 2 bits when the adjacent 2-bit error information 2b_CORRECT indicates that there is an error in any 2-bit of the read data RDATA'. The error corrector 240 may output error-corrected data RDATA and generate the internal decoding status signal IDSF indicating the error state of the error-corrected data RDATA based on the error correction result. For example, the error corrector 240 may set the internal decoding status signal IDSF to "00" in case of "NE", the internal decoding status signal IDSF to "01" or "10" in case of "CE", and the internal decoding status signal IDSF to "11" in case of "UE".

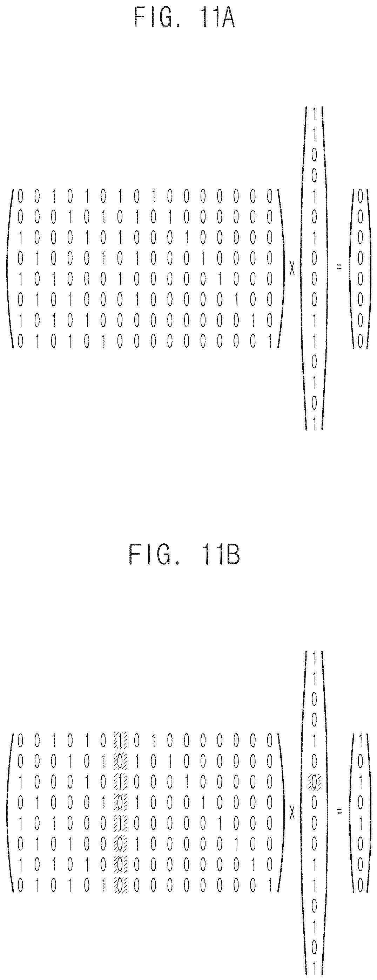

Referring to FIGS. 11A to 11C, an error correction operation of the ECC decoder 184 is shown.

Referring to FIG. 11A, when there is no error in the read data RDATA', it is described that the data (1,1,0,0,1,0,1,0) and the error correction code (0,0,1,1,0,1,0,1) are read after the data (1,1,0,0,1,0,1,0) and the error correction code (0,0,1,1,0,1,0,1) are stored in the memory cell array 110. It can be seen that the syndrome (S0 to S7) is generated as (0,0,0,0,0,0,0,0) by performing a matrix multiplication operation on the check matrix of FIG. 5, and the read data RDATA' (1,1,0,0,1,0,1,0) and the error correction code ECC (0,0,1,1,0,1,0,1). When the value of the syndrome (S0 to S7) is all-zero, it may indicate that the read data RDATA' has no error. When the value of the syndrome (S0 to S7) is all-zero, the ECC decoder 184 may determine that the data DATA' has no error and output the read data RDATA' as it is. In this case, the error corrector 240 may set the internal decoding status signal IDSF to "00" to indicate that there is no error (i.e., "NE").

Referring to FIG. 11B, when there is a random 1-bit error in the read data RDATA', it is described that after the data (1,1,0,0,1,0,1,0) and the error correction code (0,0,1,1,0,1,0,1) are stored in the memory cell array 110, an error occurs in the data bit D6 and the read data RDATA' are read as (1,1,0,0,1,0,0,0). By performing a matrix multiplication operation on the check matrix of FIG. 5, and the read data RDATA' (1,1,0,0,1,0,0,0) and the error correction code ECC (0,0,1,1,0,1,0,1), the syndrome (S0 to S7) is generated to have a value of (1,0,1,0,1,0,0,0). The value (1,0,1,0,1,0,0,0) of the syndrome (S0 to S7) may indicate a location of the error, and since a column vector having (1,0,1,0,1,0,0,0) among the column vectors in the first decoding table of FIG. 9 corresponds to a column vector of the data bit D6, the ECC decoder 184 may determine that the data bit D6 has an error, correct the error by inverting the data bit D6 of 0 to 1, and output the error-corrected data RDATA (1,1,0,0,1,0,1,0). In this case, the error corrector 240 may set the internal decoding status signal IDSF to "01" (or "10") to indicate that a correctable error(i.e., "CE") has occurred.

Referring to FIG. 11C, when there is an adjacent 2-bit error in the read data RDATA', it is described that after the data (1,1,0,0,1,0,1,0) and the error correction code (0,0,1,1,0,1,0,1) are stored in the memory cell array 110, an error occurs in the data bit D6 and the data bit D7, and the read data RDATA' are read as (1,1,0,0,1,0,0,1). By performing a matrix multiplication operation on the check matrix of FIG. 5, and the read data RDATA' (1,1,0,0,1,0,0,1) and the error correction code ECC (0,0,1,1,0,1,0,1), the syndrome (S0 to S7) is generated to have a value of (1,1,1,1,1,1,0,0). Since a column vector having (1,1,1,1,1,1,0,0) among the column vectors in the second decoding table of FIG. 10 corresponds to the data bits D6 and D7, the ECC decoder 184 may determine that the data bits D6 and D7 have an error, correct the error by inverting the data bit D6 of 0 to 1 and inverting the data bit D7 of 1 to 0, and output the output the error-corrected data RDATA (1,1,0,0,1,0,1,0). In this case, the error corrector 240 may set the internal decoding status signal IDSF to "01" (or "10") to indicate that a correctable error (i.e., "CE") has occurred.

FIG. 12 is a diagram for describing the first pattern PAT_0 and the second pattern PAT_1 according to an embodiment of the present disclosure.

Referring to FIG. 12, the pattern setting circuit 191 may generate the first pattern PAT_0 having all-zero bits. For example, the first pattern PAT_0 may be formed of (0,0,0,0,0,0,0,0).

Furthermore, the pattern setting circuit 191 may generate the second pattern PAT_1 with a column vector different from the results of an exclusive OR (XOR) operation on any two or more of column vectors of the first decoding table used by the 1-bit error decoder 232 and the column vectors of the second decoding table used by the adjacent 2-bit error decoder 234. For example, the pattern setting circuit 191 may constitute the second pattern PAT_1 with a column vector that cannot be generated by performing an exclusive OR (XOR) operation on any of 16 column vectors of the first decoding table of FIG. 9 and eight column vectors of the second decoding table of FIG. 10. For example, the pattern setting circuit 191 may set the second pattern PAT_1 of (0,0,0,1,1,0,1,1).

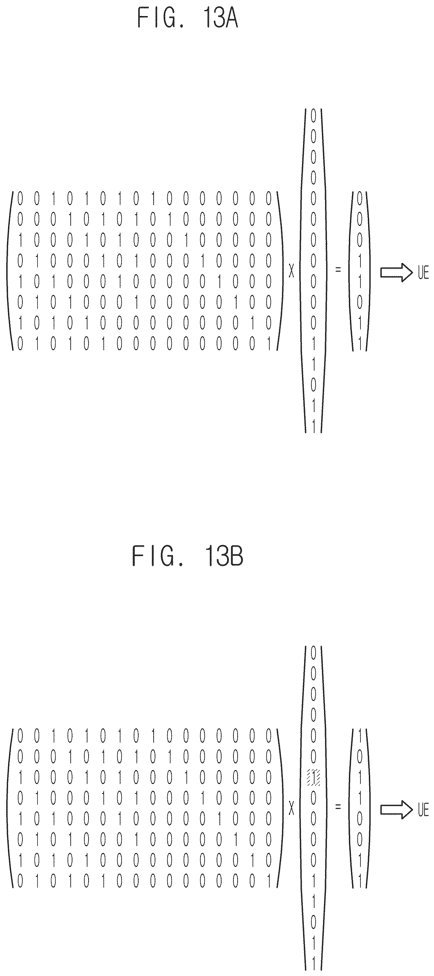

FIGS. 13A to 13C are diagrams for describing an error correction operation using the first pattern PAT_0 and the second pattern PAT_1 of FIG. 12.

Referring to FIG. 13A, it is described that the first pattern PAT_0 (0,0,0,0,0,0,0,0) and the second pattern PAT_1 (0,0,0,1,1,0,1,1) are read without an error, after they are stored in the memory cell array 110. It can be seen that the syndrome (S0 to S7) is generated as (0,0,0,1,1,0,1,1) by performing a matrix multiplication operation on the check matrix of FIG. 5, and the first pattern PAT_0 (0,0,0,0,0,0,0,0) and the second pattern PAT_1 (0,0,0,1,1,0,1,1). Since there is no column vector having (0,0,0,1,1,0,1,1) among the column vectors of the first and second decoding tables of FIGS. 9 and 10, the error corrector 240 cannot correct an error of the first pattern PAT_0 and the second pattern PAT_1, and may set the internal decoding status signal IDSF to "11" to indicate that an uncorrectable error (i.e., "UE") has occurred.

Referring to FIG. 13B, it is described that after the first pattern PAT_0 (0,0,0,0,0,0,0,0) and the second pattern PAT_1 (0,0,0,1,1,0,1,1) are stored in the memory cell array 110, since a random 1-bit error occurs in the first pattern PAT_0 (0,0,0,0,0,0,0,0), the first pattern PAT_0 is read as (0,0,0,0,0,0,1,0). It can be seen that the syndrome (S0 to S7) is generated as (1,0,1,1,0,0,1,1) by performing a matrix multiplication operation on the check matrix of FIG. 5, and the first pattern PAT_0 (0,0,0,0,0,0,1,0) and the second pattern PAT_1 (0,0,0,1,1,0,1,1). Since there is no column vector having (1,0,1,1,0,0,1,1) among the column vectors of the first and second decoding tables, the error corrector 240 cannot correct an error of the first pattern PAT_0 and the second pattern PAT_1, and may set the internal decoding status signal IDSF to "11" to indicate that an uncorrectable error (i.e., "UE") has occurred.

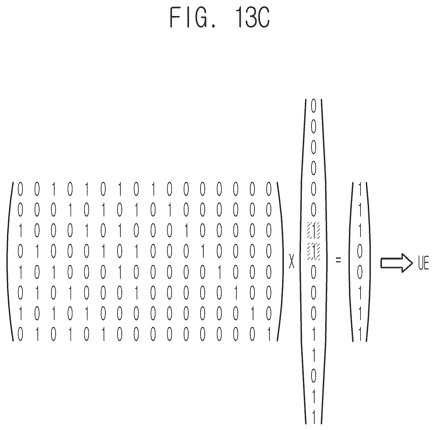

Referring to FIG. 13C, it is described that after the first pattern PAT_0 (0,0,0,0,0,0,0,0) and the second pattern PAT_1 (0,0,0,1,1,0,1,1) are stored in the memory cell array 110, since an adjacent 2-bit error occurs in the first pattern PAT_0 (0,0,0,0,0,0,0,0), the first pattern PAT_0 is read as (0,0,0,0,0,0,1,1). It may be confirmed that the syndrome (S0 to S7) is generated as (1,1,1,0,0,1,1,1) by performing a matrix multiplication operation on the check matrix of FIG. 5, and the first pattern PAT_0 (0,0,0,0,0,0,1,1) and the second pattern PAT_1 (0,0,0,1,1,0,1,1). Since there is no column vector having (1,1,1,0,0,1,1,1) among the column vectors of the first and second decoding tables, the error corrector 240 cannot correct an error of the first pattern PAT_0 and the second pattern PAT_1, and may set the internal decoding status signal IDSF to "11" to indicate that that an uncorrectable error (i.e., "UE") has occurred.

As described above, in an embodiment of the present disclosure, the internal decoding status signal IDSF indicating "UE" may be output by setting a data/parity pattern to the first pattern PAT_0 and the second pattern PAT_1 which are composed of a pattern that is uncorrectable not only by existing 1-bit error correction but also by adjacent 2-bit error correction.

FIG. 14 is a diagram illustrating a detailed configuration of the pattern selection circuit 192 of FIG. 3.

Referring to FIG. 14, the pattern selection circuit 192 may include a first selector 310 and a second selector 320.

The first selector 310 may output the write data WDATA' by selecting one of the write data WDATA and the first pattern PAT_0 according to the write poison signal W_PF. The first selector 310 may output the first pattern PAT_0 as the write data WDATA' when the write poison signal W_PF is a high bit.

The second selector 320 may output the write error correction code W_ECC by selecting one of the preliminary error correction code PRE_ECC and the second pattern PAT_1 according to the write poison signal W_PF. The second selector 320 may output the second pattern PAT_1 as the write error correction code W_ECC when the write poison signal W_PF is a high bit.

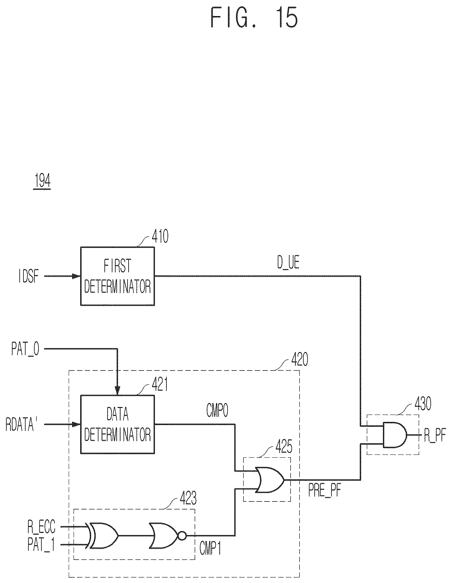

FIG. 15 is a circuit diagram illustrating a detailed configuration of the pattern determination circuit 194 of FIG. 3.

Referring to FIG. 15, the pattern determination circuit 194 may include a first determinator 410, a second determinator 420, and a signal output circuit 430.

The first determinator 410 may generate a detection signal D_UE by detecting the internal decoding status signal IDSF indicating "UE". For example, the first determinator 410 may activate the detection signal D_UE to a logic high level when the internal decoding status signal IDSF is set to "11".

The second determinator 420 may generate a first comparison result signal CMPO by comparing the read data RDATA' with the first pattern PAT_0, and generate a second comparison result signal CMP1 by comparing the read error correction code R_ECC with the second pattern PAT_1. The second determinator 420 may generate a preliminary poison signal PRE_PF according to the first comparison result signal CMPO and the second comparison result signal CMP1.

In detail, the second determinator 420 may include a data determinator 421, a parity determinator 423, and a preliminary output circuit 425.

The data determinator 421 may generate the first comparison result signal CMPO by comparing the read data RDATA' with the first pattern PAT_0. The data determinator 421 may generate the first comparison result signal CMPO activated to a logic high level when the read data RDATA' are identical to the first pattern PAT_0. Depending on an embodiment, the data determinator 421 may be implemented with logics for checking whether the read data RDATA' have all-zero bits.

The parity determinator 423 may generate the second comparison result signal CMP1 by comparing the read error correction code R_ECC with the second pattern PAT_1. The parity determinator 423 may generate the second comparison result signal CMP1 activated to a logic high level when the read error correction code R_ECC is identical to the second pattern PAT_1. For example, the parity determinator 423 may be implemented with logics for performing an exclusive NOR (XNOR) operation on the read error correction code R_ECC and the second pattern PAT_1.

The preliminary output circuit 425 may generate the preliminary poison signal PRE_PF activated to a logic high level when one of the first comparison result signal CMPO and the second comparison result signal CMP1 is activated. For example, the preliminary output circuit 425 may be implemented with a logic for performing an OR operation on the first comparison result signal CMPO and the second comparison result signal CMP1.

The signal output circuit 430 may output the read poison signal R_PF which is activated when both the detection signal D_UE and the preliminary poison signal PRE_PF are activated. For example, the signal output circuit 430 may be implemented with a logic for performing an AND operation on the detection signal D_UE and the preliminary poison signal PRE_PF.

With the above configuration, the pattern determination circuit 194 may activate and output the read poison signal R_PF when the decoding status signal DSF indicates "UE", and when the first comparison result signal CMPO or the second comparison result signal CMP1 is activated. In an embodiment of the present disclosure, in a situation in which a specific data/parity pattern is stored instead of the poison data, since the remaining pattern is preserved even if a 1-bit error or an adjacent 2-bit error occurs in either of the data pattern and the parity pattern, the preliminary poison signal PRE_PF may be activated to a logic high level. Therefore, even if an error occurs in either the data pattern or the parity pattern, it may be indicated that the corresponding data/parity pattern is the poison data.

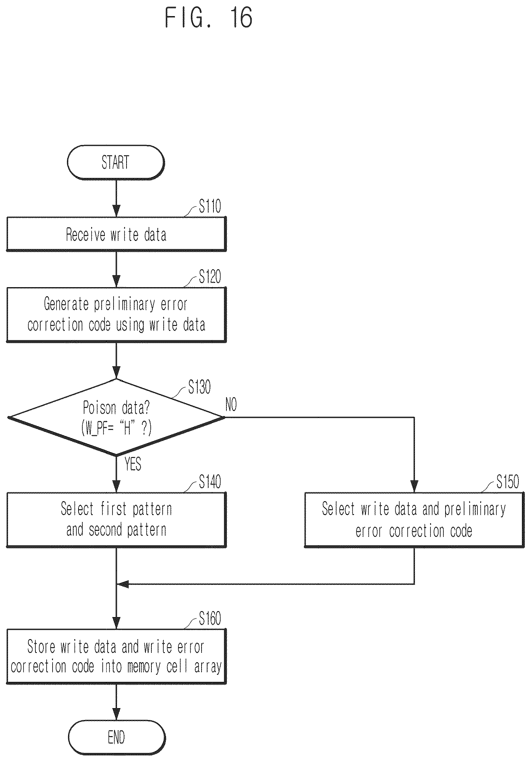

FIG. 16 is a flowchart for describing a write operation of the memory device 100 according to an embodiment of the present disclosure.

Referring to FIG. 16, the write data WDATA is received from the memory controller 200 during a write operation (at S110).

The ECC encoder 182 may generate the preliminary error correction code PRE_ECC using the write data WDATA (at S120).

When the write poison signal W_PF is a high bit, the pattern selection circuit 192 may determine the write data WDATA as the poison data ("YES" of S130), and output the write data WDATA' and the write error correction code W_ECC by selecting the first pattern PAT_0 and the second pattern PAT_1 (at S140). On the other hand, when the write poison signal W_PF is a low bit ("NO" of S130), the pattern selection circuit 192 may determine the write data WDATA as normal data, and output the write data WDATA' and the write error correction code W_ECC by selecting the write data WDATA and the preliminary error correction code PRE_ECC (at S150).

The column control circuit 130 may write the write data WDATA' and the write error correction code W_ECC to the memory cell array 110 (at S160).

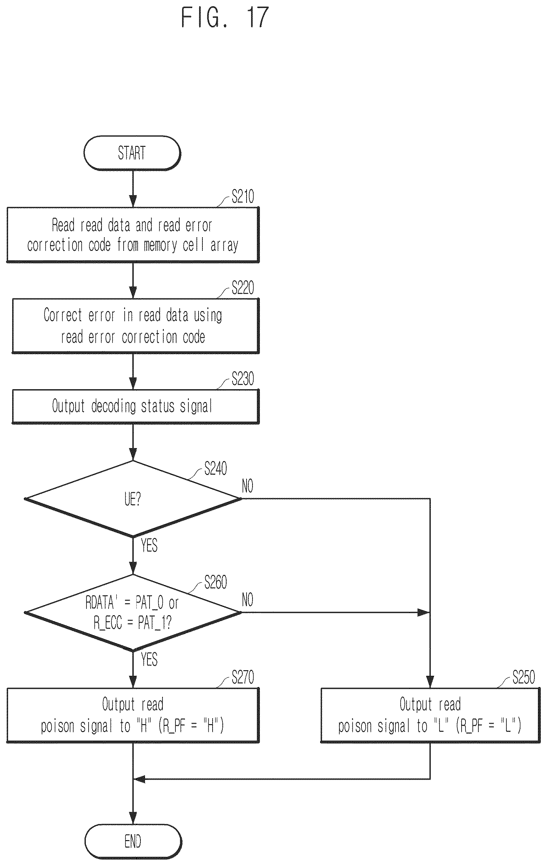

FIG. 17 is a flowchart for describing a read operation of the memory device 100 according to an embodiment of the present disclosure.

Referring to FIG. 17, during a read operation, the read data RDATA' and the read error correction code R_ECC are read from memory cell array 110 (at S210).

The ECC decoder 184 may correct an error in the read data RDATA' using the read error correction code R_ECC (at S220). The ECC decoder 184 may output the internal decoding status signal IDSF indicating an error state of the error-corrected data based on the error correction result (at S230).

When the internal decoding status signal IDSF does not indicate "UE" ("NO" of S240), the pattern determination circuit 194 may output the read poison signal R_PF to a low bit, regardless of the read data RDATA' and the read error correction code R_ECC (at S250). In this case, the internal decoding status signal IDSF indicates "NE" or "CE", the read poison signal R_PF becomes a low bit. Accordingly, the memory device 100 may notify, to the memory controller 200, that the read data RDATA' are normal data because the read data RDATA' has no error, or the read data RDATA' has an error but the error has been corrected.

On the other hand, when the internal decoding status signal IDSF indicates "UE" ("YES" of S240), the pattern determination circuit 194 may set the read poison signal R_PF according to the comparison results between the read data RDATA' and the first pattern PAT_0, and between the read error correction code R_ECC and the second pattern PAT_1. (at S260).

When the read data RDATA' are identical to the first pattern PAT_0, or the read error correction code R_ECC is identical to the second pattern PAT_1 ("YES" of S260), the pattern determination circuit 194 may output the read poison signal R_PF to a high bit (at S270). In this case, the internal decoding status signal IDSF indicates "UE", and the read poison signal R_PF becomes a high bit, so that the memory device 100 may notify, to the memory controller 200, that the read data RDATA' are poison data.

On the other hand, when the read data RDATA' are different from to the first pattern PAT_0, and the read error correction code R_ECC is different from the second pattern PAT_1 ("NO" of S260), the pattern determination circuit 194 may output the read poison signal R_PF to a low bit (at S250). In this case, the internal decoding status signal IDSF indicates "UE", and the read poison signal R_PF becomes a low bit. Accordingly, the memory device 100 may notify, to the memory controller 200, that the read data RDATA' are normal data but "UE" occurred in the read data RDATA'. That is, even if the poison information is lost due to an error in the poison data, it is possible to prevent malfunction or unnecessary operations since the memory device 100 outputs the read data RDATA' to "UE".

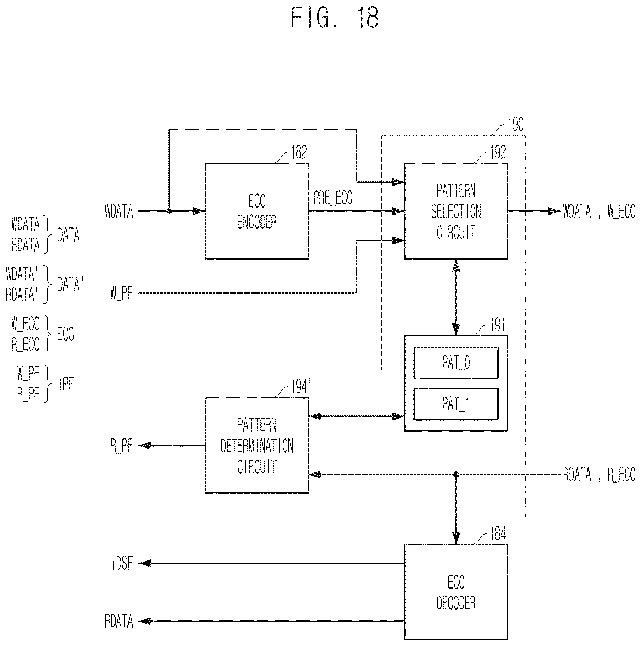

FIG. 18 is a block diagram illustrating a detailed configuration of the ECC engine 180 and the poison handling circuit 190 according to another embodiment of the present disclosure.

Referring to FIG. 18, the poison handling circuit 190 may include a pattern setting circuit 191, a pattern selection circuit 192, and a pattern determination circuit 194'. The poison handling circuit 190 of FIG. 18 may have substantially the same configuration as the poison handling circuit 190 of FIG. 3, except that the pattern determination circuit 194' does not receive an internal decoding status signal IDSF.

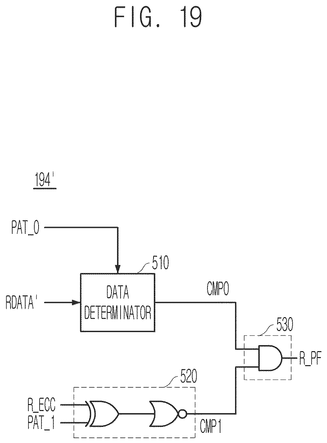

FIG. 19 is a circuit diagram illustrating a detailed configuration of the pattern determination circuit 194' of FIG. 18.

Referring to FIG. 19, the pattern determination circuit 194' may generate a first comparison result signal CMPO by comparing read data RDATA' with a first pattern PAT_0, and generate a second comparison result signal CMP1 by comparing a read error correction code R_ECC with a second pattern PAT_1. The pattern determination circuit 194' may generate a read poison signal R_PF according to the first comparison result signal CMPO and the second comparison result signal CMP1.

In detail, the pattern determination circuit 194' may include a data determinator 510, a parity determinator 520, and a signal output circuit 530.

The data determinator 510 may generate the first comparison result signal CMPO by comparing the read data RDATA' with the first pattern PAT_0. The data determinator 510 may generate the first comparison result signal CMPO activated to a logic high level when the read data RDATA' are identical to the first pattern PAT_0. The data determinator 510 may have substantially the same configuration as the data determinator 421 of FIG. 15.

The parity determinator 520 may generate the second comparison result signal CMP1 by comparing the read error correction code R_ECC with the second pattern PAT_1. The parity determinator 520 may generate the second comparison result signal CMP1 activated to a logic high level when the read error correction code R_ECC is identical to the second pattern PAT_1. The parity determinator 520 may have substantially the same configuration as the parity determinator 423 of FIG. 15.

The signal output circuit 530 may output the read poison signal R_PF which is activated when both the first comparison result signal CMPO and the second comparison result signal CMP1 are activated. For example, the signal output circuit 530 may be implemented with a logic for performing an AND operation on the first comparison result signal CMPO and the second comparison result signal CMP1.

With the above configuration, the pattern determination circuit 194' may activate and output the read poison signal R_PF when both the first comparison result signal CMPO and the second comparison result signal CMP1 are activated, regardless of the decoding status signal DSF. In an embodiment of the present disclosure, poison information is lost due to an error in a specific data/parity pattern stored instead of poison data, and even if the read poison signal R_PF is set to an incorrect bit (i.e., a low bit), the decoding status signal DSF may be set to "UE". That is, even if the poison information is lost due to an error in the poison data, it is possible to prevent malfunction or unnecessary operations since the memory device 100 outputs the read data RDATA' to "UE".

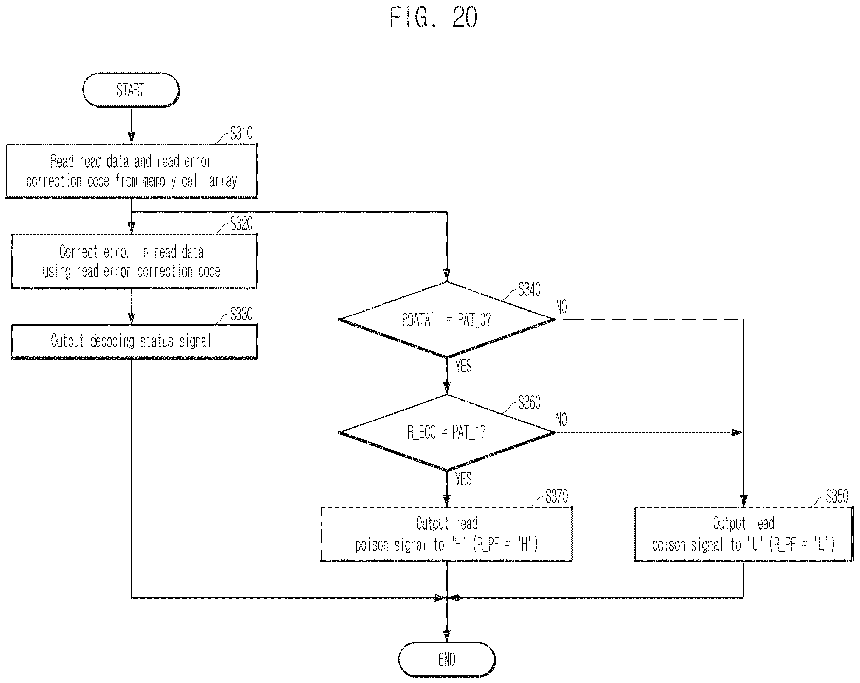

FIG. 20 is a flowchart for describing a read operation of the memory device 100 according to another embodiment of the present disclosure.

Referring to FIG. 20, during a read operation, the read data RDATA' and the read error correction code R_ECC are read from memory cell array 110 (at S310).

The ECC decoder 184 may correct an error in the read data RDATA' using the read error correction code R_ECC (at S320). The ECC decoder 184 may output the internal decoding status signal IDSF indicating an error state of the error-corrected data based on the error correction result (at S330).

The pattern determination circuit 194' may set the read poison signal R_PF according to the comparison results between the read data RDATA' and the first pattern PAT_0, and between the read error correction code R_ECC and the second pattern PAT_1.

When the read data RDATA' are identical to the first pattern PAT_0 ("YES" of S340), and the read error correction code R_ECC is identical to the second pattern PAT_1 ("YES" of S360), the pattern determination circuit 194' may output the read poison signal R_PF to a high bit (at S370). In this case, the read poison signal R_PF may become a high bit, so that the memory device 100 may notify, to the memory controller 200, that the read data RDATA' are poison data.

On the other hand, when the read data RDATA' are different from the first pattern PAT_0 ("NO" of S340), or when the read error correction code R_ECC is different from the second pattern PAT_1 ("NO" of S360), the pattern determination circuit 194' may output the read poison signal R_PF to a low bit (at S350). In this case, the internal decoding status signal IDSF indicates "UE", and the read poison signal R_PF becomes a low bit. Accordingly, the memory device 100 may notify, to the memory controller 200, that the read data RDATA' are normal data but "UE" occurred in the read data RDATA'. That is, even if the poison information is lost due to an error in the poison data, it is possible to prevent malfunction or unnecessary operations since the memory device 100 outputs the read data RDATA' to "UE".

While the embodiments of the present disclosure have been described with respect to the specific embodiments, it will be apparent to those skilled in the art that various changes and modifications may be made without departing from the spirit and scope of the present disclosure as defined in the following claims. Furthermore, the embodiments may be combined to form additional embodiments.

**Claims**

1.  A memory system comprising:

    a memory controller; and
    a memory device configured to:

        during a write operation, generate a write error correction code based on write data, and store, according to a write poison signal received from the memory controller, the write data and the write error correction code, or first and second patterns in a memory cell array included in the memory device, and
        during a read operation, correct an error in read data read from the memory cell array based on a read error correction code read from the memory cell array, output a decoding status signal according to an error correction result, and generate a read poison signal according to at least one of the decoding status signal, a first comparison result between the read data and the first pattern, and a second comparison result between the read error correction code and the second pattern, to output the read poison signal to the memory controller.

2.  The memory system of claim 1, wherein, during the read operation, the memory device is configured to output the read poison signal activated when the decoding status signal indicates an uncorrectable error, and the first comparison result or the second comparison result matches.

3.  The memory system of claim 1, wherein, during the read operation, the memory device is configured to output the read poison signal activated when both the first comparison result and the second comparison result match.

4.  The memory system of claim 1, wherein the memory device is configured to:

    correct a random 1-bit error of the read data based on a first decoding table; and
    correct an adjacent 2-bit error of the read data based on a second decoding table.

5.  The memory system of claim 4, wherein the memory device is configured to:

    preset the first pattern to have all-zero bits; and
    preset the second pattern to have column vectors different from results of an exclusive OR operation on two or more of column vectors of the first decoding table and column vectors of the second decoding table.

6.  A memory device comprising:

    a pattern selection circuit configured to provide, to a memory cell array, write data and a write error correction code which are externally received, or first and second patterns which are internally preset, according to a write poison signal;
    an error correction code (ECC) decoder configured to correct an error in read data read from the memory cell array based on a read error correction code read from the memory cell array, and output a decoding status signal according to an error correction result; and
    a pattern determination circuit configured to output a read poison signal according to the decoding status signal, a first comparison result between the read data and the first pattern, and a second comparison result between the read error correction code and the second pattern.

7. The memory device of claim 6, wherein the pattern determination circuit is configured to output the read poison signal activated when the decoding status signal indicates an uncorrectable error, and the first comparison result or the second comparison result matches.

8. The memory device of claim 6, wherein the pattern determination circuit includes:

   a first determinator configured to generate a detection signal that is activated when the decoding status signal indicates an uncorrectable error;
   a second determinator configured to generate a preliminary poison signal that is activated when at least one of the first comparison result and the second comparison result matches; and
   a signal output circuit configured to output the read poison signal that is activated when both the detection signal and the preliminary poison signal are activated.

9. The memory device of claim 6, wherein the ECC decoder is configured to:

   correct a random 1-bit error of the read data based on a first decoding table; and
   correct an adjacent 2-bit error of the read data based on a second decoding table.

10. The memory device of claim 9, wherein the first pattern is preset to have all-zero bits, and the second pattern is preset to have column vectors different from results of an exclusive OR operation on two or more of column vectors of the first decoding table and column vectors of the second decoding table.

11. The memory device of claim 6, wherein the ECC decoder includes:

   a syndrome generation circuit configured to compare the read error correction code with a result of calculating a check matrix and the read data to generate a syndrome;
   a first error decoder configured to generate first error correction information based on a first decoding table and the syndrome;
   a second error decoder configured to generate second error correction information based on a second decoding table different from the first decoding table; and
   an error corrector configured to correct the error of the read data based on the first error correction information and the second error correction information.

12. The memory device of claim 11, wherein the ECC decoder is configured to:

   set the first decoding table to have a same configuration as the check matrix; and
   set the second decoding table to have column vectors of the first decoding table reduced by a rate of 2:1.

13. The memory device of claim 11, wherein the syndrome generation circuit includes:

   a check matrix calculation circuit configured to calculate the check matrix and the read data; and
   a syndrome calculation circuit configured to add the read error correction code and a calculation result generated by the check matrix calculation circuit to generate the syndrome.

14. The memory device of claim 6, further comprising an ECC encoder configured to calculate a check matrix and the write data to generate the write error correction code.

# FIG. 1

# FIG. 2

EP 4 773 012 A1

FIG. 3

# FIG. 4

to 192    from 110
PRE_ECC   R_ECC

182

EN/DEC

210

WDATA → CHECK MATRIX CALCULATION CIRCUIT

RDATA' → 

IECC →

EN/DEC

184

220

212

SYNDROME CALCULATION CIRCUIT

SYN

232

1-BIT ERROR DECODER

234

ADJACENT 2-BIT ERROR DECODER

1b-CORRECT

2b-CORRECT

240

RDATA' → ERROR CORRECTOR → RDATA

→ IDSF

FIG. 5

| DATA | | | | | | | | ECC | | | | | | | |
|---|---|---|---|---|---|---|---|---|---|---|---|---|---|---|---|
| D0 | D1 | D2 | D3 | D4 | D5 | D6 | D7 | E0 | E1 | E2 | E3 | E4 | E5 | E6 | E7 |
| 0 | 0 | 1 | 0 | 1 | 0 | 1 | 0 | 1 | 0 | 0 | 0 | 0 | 0 | 0 | 0 |
| 0 | 0 | 0 | 1 | 0 | 1 | 0 | 1 | 0 | 1 | 0 | 0 | 0 | 0 | 0 | 0 |
| 1 | 0 | 0 | 0 | 1 | 0 | 1 | 0 | 0 | 0 | 1 | 0 | 0 | 0 | 0 | 0 |
| 0 | 1 | 0 | 0 | 0 | 1 | 0 | 1 | 0 | 0 | 0 | 1 | 0 | 0 | 0 | 0 |
| 1 | 0 | 1 | 0 | 0 | 0 | 1 | 0 | 0 | 0 | 0 | 0 | 1 | 0 | 0 | 0 |
| 0 | 1 | 0 | 1 | 0 | 0 | 0 | 1 | 0 | 0 | 0 | 0 | 0 | 1 | 0 | 0 |
| 1 | 0 | 1 | 0 | 1 | 0 | 0 | 0 | 0 | 0 | 0 | 0 | 0 | 0 | 1 | 0 |
| 0 | 1 | 0 | 1 | 0 | 1 | 0 | 0 | 0 | 0 | 0 | 0 | 0 | 0 | 0 | 1 |

## FIG. 6

## FIG. 7

# FIG. 8

$$
\begin{pmatrix}
0 & 0 & 1 & 0 & 1 & 0 & 1 & 0 & 1 & 0 & 0 & 0 & 0 & 0 & 0 & 0 \\
0 & 0 & 0 & 1 & 0 & 1 & 0 & 1 & 0 & 1 & 0 & 0 & 0 & 0 & 0 & 0 \\
1 & 0 & 0 & 0 & 1 & 0 & 1 & 0 & 0 & 0 & 1 & 0 & 0 & 0 & 0 & 0 \\
0 & 1 & 0 & 0 & 0 & 1 & 0 & 1 & 0 & 0 & 0 & 1 & 0 & 0 & 0 & 0 \\
1 & 0 & 1 & 0 & 0 & 0 & 1 & 0 & 0 & 0 & 0 & 0 & 1 & 0 & 0 & 0 \\
0 & 1 & 0 & 1 & 0 & 0 & 0 & 1 & 0 & 0 & 0 & 0 & 0 & 1 & 0 & 0 \\
1 & 0 & 1 & 0 & 1 & 0 & 0 & 0 & 0 & 0 & 0 & 0 & 0 & 0 & 1 & 0 \\
0 & 1 & 0 & 1 & 0 & 1 & 0 & 0 & 0 & 0 & 0 & 0 & 0 & 0 & 0 & 1
\end{pmatrix}
\times
\begin{pmatrix}
D0' \\ D1' \\ D2' \\ D3' \\ D4' \\ D5' \\ D6' \\ D7' \\ D0 \\ E1 \\ E2 \\ E3 \\ E4 \\ E5 \\ E6 \\ E7
\end{pmatrix}
=
\begin{pmatrix}
S0 \\ S1 \\ S2 \\ S3 \\ S4 \\ S5 \\ S6 \\ S7
\end{pmatrix}
$$

## FIG. 9

| DATA | | | | | | | | ECC | | | | | | | |
|---|---|---|---|---|---|---|---|---|---|---|---|---|---|---|---|
| D0' | D1' | D2' | D3' | D4' | D5' | D6' | D7' | E0 | E1 | E2 | E3 | E4 | E5 | E6 | E7 |
| 0 | 0 | 1 | 0 | 1 | 0 | 1 | 0 | 1 | 0 | 0 | 0 | 0 | 0 | 0 | 0 |
| 0 | 0 | 0 | 1 | 0 | 1 | 0 | 1 | 0 | 1 | 0 | 0 | 0 | 0 | 0 | 0 |
| 1 | 0 | 0 | 0 | 1 | 0 | 1 | 0 | 0 | 0 | 1 | 0 | 0 | 0 | 0 | 0 |
| 0 | 1 | 0 | 0 | 0 | 1 | 0 | 1 | 0 | 0 | 0 | 1 | 0 | 0 | 0 | 0 |
| 1 | 0 | 1 | 0 | 0 | 0 | 1 | 0 | 0 | 0 | 0 | 0 | 1 | 0 | 0 | 0 |
| 0 | 1 | 0 | 1 | 0 | 0 | 0 | 1 | 0 | 0 | 0 | 0 | 0 | 1 | 0 | 0 |
| 1 | 0 | 1 | 0 | 1 | 0 | 0 | 0 | 0 | 0 | 0 | 0 | 0 | 0 | 1 | 0 |
| 0 | 1 | 0 | 1 | 0 | 1 | 0 | 0 | 0 | 0 | 0 | 0 | 0 | 0 | 0 | 1 |

## FIG. 10

| DATA | | | | ECC | | | |
|---|---|---|---|---|---|---|---|
| D0'D1' | D2'D3' | D4'D5' | D6'D7' | E0 | E2 | E4 | E6 |
| 0 | 1 | 1 | 1 | 1 | 0 | 0 | 0 |
| 0 | 1 | 1 | 1 | 1 | 0 | 0 | 0 |
| 1 | 0 | 1 | 1 | 0 | 1 | 0 | 0 |
| 1 | 0 | 1 | 1 | 0 | 1 | 0 | 0 |
| 1 | 0 | 0 | 1 | 0 | 0 | 1 | 0 |
| 1 | 1 | 0 | 1 | 0 | 0 | 1 | 0 |
| 1 | 1 | 1 | 0 | 0 | 0 | 0 | 1 |
| 1 | 1 | 1 | 0 | 0 | 0 | 0 | 1 |

# FIG. 11A

# FIG. 11B

FIG. 11C

$$\begin{pmatrix} 0 & 0 & 1 & 0 & 1 & 0 & 1 & 0 & 1 & 0 & 0 & 0 & 0 & 0 & 0 \\ 0 & 0 & 0 & 1 & 0 & 1 & 0 & 1 & 0 & 1 & 0 & 0 & 0 & 0 & 0 \\ 1 & 0 & 0 & 0 & 1 & 0 & 1 & 0 & 0 & 0 & 1 & 0 & 0 & 0 & 0 \\ 0 & 1 & 0 & 0 & 0 & 1 & 0 & 1 & 0 & 0 & 0 & 1 & 0 & 0 & 0 \\ 1 & 0 & 1 & 0 & 0 & 0 & 1 & 0 & 0 & 0 & 0 & 0 & 1 & 0 & 0 \\ 0 & 1 & 0 & 1 & 0 & 0 & 0 & 1 & 0 & 0 & 0 & 0 & 0 & 1 & 0 & 0 \\ 1 & 0 & 1 & 0 & 1 & 0 & 0 & 0 & 0 & 0 & 0 & 0 & 0 & 1 & 0 \\ 0 & 1 & 0 & 1 & 0 & 1 & 0 & 0 & 0 & 0 & 0 & 0 & 0 & 0 & 1 \end{pmatrix} X \begin{pmatrix} 1 \\ 1 \\ 0 \\ 0 \\ 1 \\ 0 \\ 0 \\ 0 \\ 0 \\ 0 \\ 1 \\ 1 \\ 0 \\ 1 \\ 0 \\ 1 \end{pmatrix} = \begin{pmatrix} 1 \\ 1 \\ 1 \\ 1 \\ 1 \\ 1 \\ 0 \\ 0 \end{pmatrix}$$

FIG. 12

| | PAT_0 | | | | | | | | PAT_1 | | | | | | | |
|---|---|---|---|---|---|---|---|---|---|---|---|---|---|---|---|---|
| 0 | 0 | 0 | 0 | 0 | 0 | 0 | 0 | 0 | 0 | 0 | 1 | 1 | 0 | 1 | 1 |

## FIG. 13A

## FIG. 13B

# FIG. 13C

FIG. 14

FIG. 15

# FIG. 16

```
                    ┌─────────────┐
                    │    START    │
                    └──────┬──────┘
                           │
                           ▼         ╭ S110
              ┌────────────────────────────┐
              │      Receive write data     │
              └──────────────┬──────────────┘
                             │
                             ▼       ╭ S120
              ┌────────────────────────────┐
              │    Generate preliminary error    │
              │  correction code using write data │
              └──────────────┬──────────────┘
                             │
                             ▼       ╭ S130
                     ╱─────────────────╲          NO
                    ╱   Poison data?     ╲─────────────┐
                    ╲  (W_PF= "H" ?)     ╱             │
                     ╲─────────────────╱              │
                           │ YES                       │
                           ▼       ╭ S140              ▼       ╭ S150
              ┌────────────────────────┐   ┌────────────────────────────┐
              │   Select first pattern │   │ Select write data and preliminary │
              │   and second pattern   │   │    error correction code     │
              └───────────┬────────────┘   └──────────────┬─────────────┘
                          │                                │
                          └──────────────◄─────────────────┘
                                     │
                                     ▼       ╭ S160
              ┌──────────────────────────────────────┐
              │    Store write data and write error    │
              │ correction code into memory cell array │
              └────────────────────┬───────────────────┘
                                   │
                                   ▼
                            ┌─────────────┐
                            │     END     │
                            └─────────────┘
```

# FIG. 17

```
         ( START )
             │
             ▼                        ⌐S210
┌─────────────────────────────────────┐
│   Read read data and read error      │
│ correction code from memory cell array│
└─────────────────────────────────────┘
             │
             ▼                        ⌐S220
┌─────────────────────────────────────┐
│     Correct error in read data using  │
│      read error correction code       │
└─────────────────────────────────────┘
             │
             ▼                        ⌐S230
┌─────────────────────────────────────┐
│      Output decoding status signal    │
└─────────────────────────────────────┘
             │
             ▼                        ⌐S240
           ╱────────╲        NO
          ╱   UE?     ╲──────────────────────────┐
           ╲────────╱                            │
             │ YES                               │
             ▼                     ⌐S260         │
           ╱──────────────╲   NO                 │
          ╱ RDATA' = PAT_O or╲──────────────┐    │
          ╲  R_ECC = PAT_1?  ╱              │    │
           ╲──────────────╱                 │    │
             │ YES                          ▼    ▼
             ▼              ⌐S270                      ⌐S250
┌──────────────────────────┐      ┌──────────────────────────┐
│      Output read          │      │      Output read          │
│ poison signal to "H" (R_PF = "H")│  │ poison signal to "L" (R_PF = "L")│
└──────────────────────────┘      └──────────────────────────┘
             │                              │
             ▼◄─────────────────────────────┘
           ( END )
```

# FIG. 18

# FIG. 19

194'

PAT_0

510

RDATA'

DATA
DETERMINATOR

CMP0

530

R_PF

R_ECC
PAT_1

520

CMP1

# FIG. 20

START

S310
Read read data and read error
correction code from memory cell array

S320
Correct error in read data
using read error correction code

S330
Output decoding status signal

S340
RDATA' = PAT_0? — NO

YES

S360
R_ECC = PAT_1? — NO

YES

S370
Output read
poison signal to "H" (R_PF = "H")

S350
Output read
poison signal to "L" (R_PF = "L")

END

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 960 351 B1 (MODI DIPAKKUMAR TRIKAMLAL [IN] ET AL) 16 April 2024 (2024-04-16) * the whole document * ----- | 1-14 | INV. G06F11/10 |
| X | US 12 066 893 B2 (SAMSUNG ELECTRONICS CO LTD [KR]) 20 August 2024 (2024-08-20) * the whole document * ----- | 1-14 | |
| X | US 11 775 382 B2 (MICRON TECHNOLOGY INC [US]) 3 October 2023 (2023-10-03) * the whole document * ----- | 1-14 | |

| TECHNICAL FIELDS SEARCHED (IPC) |
|---|
| G06F |

The present search report has been drawn up for all claims

| Place of search | Date of completion of the search | Examiner |
|---|---|---|
| Munich | 28 April 2026 | Bauer, Regine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 7751

28-04-2026

| Patent document cited in search report | | Publication date | Patent family member(s) | | Publication date |
|---|---|---|---|---|---|
| US 11960351 | B1 | 16-04-2024 | NONE | | |
| US 12066893 | B2 | 20-08-2024 | CN | 115376602 A | 22-11-2022 |
| | | | TW | 202247164 A | 01-12-2022 |
| | | | US | 2022374309 A1 | 24-11-2022 |
| | | | US | 2023367672 A1 | 16-11-2023 |
| | | | US | 2024370335 A1 | 07-11-2024 |
| US 11775382 | B2 | 03-10-2023 | CN | 116569264 A | 08-08-2023 |
| | | | US | 2022179736 A1 | 09-06-2022 |
| | | | WO | 2022125521 A1 | 16-06-2022 |